# EUROPEAN PATENT APPLICATION

(11) **EP 3 767 368 A1**
(43) Date of publication of application: **20.01.2021**
(21) Application number: 19216188.3
(22) Date of filing: 13.12.2019
(51) Int. Cl.: G02B 27/01

(54) **TRANSPARENT ORGANIC LIGHT EMITTING DIODE HEAD MOUNTED DEVICE**

(30) Priority: 17.07.2019 US 201916514239
(71) Applicant: Rockwell Collins, Inc., Cedar Rapids, IA 52498 (US)
(72) Inventor: HENRY, Daniel J., Cedar Rapids, IA Iowa 52411 (US); OLSON, Ryan J., Marion, IA Iowa 52302 (US)
(74) Representative: Dehns

(57) **Abstract**

A system (100) and method (800) simplify a Head Mounted Display (HMD) design employing an array (330) of individual Transparent Organic Light Emitting Diode (TOLED) (or similar transparent emitter) elements (230) or a group of sub-elements between dual microlens (ML) elements (220, 240) to create a transparent visual display (112). The ML elements present both the ambient imagery and synthetic TOLED symbology at the user eye. The user side ML array (340) presents the TOLED image at a defined distance (e.g., several feet to infinity) (to prevent near focus eye strain) and the ML array (320) on the subject side of the transparent visual display enables presentation of the ambient scene to the user eye. A spherical topography ensures that the transparent visual display optical path is along the user eye line of sight to optimize optical throughput and image clarity. A pixel pitch of the transparent visual display determines the visual acuity of the overlay.

## Description

### BACKGROUND

Traditional see-through Head Mounted Displays (HMDs) may employ micro-sized illumination arrays and various types of projection optics to display an image on a visor through which an operator may see a surrounding scene.

These projection optics may be bulky causing an increase in helmet size as well as an increase in weight in the forehead area of the helmet. This area may be particularly sensitive to an increase in weight during high G maneuvers as well as an ejection sequence.

In addition to a human strain, traditional HMD devices may inherently maintain a large Size, Weight and Power (SWaP), a high cost, may have critical alignment tolerances, significant distortion effects requiring complex mitigation via optical design and/or processing to perform image warping, and a limited field of view, brightness, and resolution.

Therefore, a need remains for a system and related method which may overcome these limitations and provide a novel solution to display an image upon a head mounted visor using transparent organic light emitting diodes.

### SUMMARY

In one aspect, embodiments of the inventive concepts disclosed herein are directed to a system for head mounted visual display. The system may comprise a transparent visual display, the transparent visual display couplable to a visor and wearable by a user. The transparent visual display may include an array of transparent organic light emitting diodes (TOLED), the array of TOLED comprised of a plurality of individual TOLED elements, each individual TOLED element associated with and coupled with an inside Microlens (ML) element and an outside ML element.

An inside ML layer may be sited proximal with the user and comprised of a plurality of the inside ML elements, each inside ML element configured to present a TOLED component of the associated individual TOLED element at an eye of the user. An outside ML layer may be sited distal from the user and comprised of a plurality of the outside ML elements, each outside ML element configured to present an ambient component at the eye of the user.

For function, the system may include a controller operatively coupled with the array of TOLED and a tangible, non-transitory memory configured to communicate with the controller, the tangible, non-transitory memory having instructions stored therein that, in response to execution by the controller, cause the controller to carry out one or more functions of the system. The controller may command a display signal, the display signal including at least one of: a mission parameter, an information parameter, a navigation parameter, a system parameter, and a sensor video image, and receive the display signal. The controller may also generate a symbology based in part on the display signal and illuminate at least one individual TOLED element to display the symbology on the transparent visual display.

A further embodiment of the inventive concepts disclosed herein may include a method for displaying symbology to a user. The method may comprise transmitting an ambient component through an array of transparent organic light emitting diodes (TOLED) and presenting an image of the transmitted ambient component to an eye of a user. For display of TOLED content, the method may include commanding a display signal, the display signal including at least one of: a mission parameter, an information parameter, a navigation parameter, and a system parameter and receiving the display signal.

The method may also include generating a symbology based in part on the display signal and illuminating at least one individual TOLED element to create a TOLED component. The method may further include displaying the symbology via the TOLED component and presenting the illuminated TOLED component to the eye of the user.

It is to be understood that both the foregoing general description and the following detailed description are exemplary and explanatory only and are not necessarily restrictive of the inventive concepts as claimed. The accompanying drawings, which are incorporated in and constitute a part of the specification, illustrate embodiments of the inventive concepts and together with the general description, serve to explain the principles of the inventive concepts disclosed herein.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity.

Certain exemplary embodiments will now be described in greater detail by way of example only and with reference to the accompanying drawings. Like reference numerals in the drawings may represent and refer to the same or similar element, feature, or function in the drawings, in which:
FIG. 1 is a diagram of a system for head mounted visual display;
FIG. 2 is a diagram of an individual TOLED element of a transparent visual display;
FIGs. 3A and 3B are diagrams of individual TOLED element of a transparent visual display with subarrays;
FIG. 4 is a diagram of a flat transparent visual display;
FIG. 5 is a diagram of a two-dimensional slice of a spherical transparent visual display;
FIG. 6 is a diagram of a stereoscopic user display of a transparent visual display;
FIG. 7 a diagram of an exemplary pilot display; and
FIG. 8 is a method flow diagram.

### DETAILED DESCRIPTION OF EXEMPLARY EMBODIMENTS

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, thus "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

### OVERVIEW

Broadly, embodiments of the inventive concepts disclosed herein are directed to a system and method simplify a Head Mounted Display (HMD) design employing an array of individual Transparent Organic Light Emitting Diode (TOLED) (or similar transparent emitter) elements or a group of sub-elements between dual microlens (ML) elements to create a transparent visual display. The ML elements present both the ambient imagery and synthetic TOLED symbology at the user eye. The user side ML array presents the TOLED image at a defined distance (e.g., several feet to infinity) (to prevent near focus eye strain) and the ML array on the subject side of the transparent visual display enables presentation of the ambient scene to the user eye. A spherical topography ensures that the transparent visual display optical path is along the user eye line of sight to optimize optical throughput and image clarity. A pixel pitch of the transparent visual display determines the visual acuity of the overlay.

**REFERENCE CHART**

| | |
|---|---|
| 100 | System for HMD |
| 110 | Visor |
| 112 | Transparent Visual Display |
| 114 | Left Visor Display |
| 116 | Right Visor Display |
| 120 | Mission Computer |
| 122 | Controller |
| 124 | Memory |
| 130 | OLED Driver |
| 140 | Head Camera |
| 142 | FLIR Camera |
| 144 | 360 Camera |
| 150 | Positioning System |
| 160 | Nav Database |
| 170 | Terrain Database |
| 200 | Individual Pixel |
| 202 | Ambient Component |
| 204 | TOLED Component |
| 220 | Outside Microlens (ML) |
| 222 | Field Lens |
| 230 | TOLED Element |
| 232 | Subarrays of TOLED |
| 240 | Inside ML |
| 250 | Eye of the User |
| 252 | Eye Radial |
| 254 | Optical Axis |
| 300 | Individual Pixel Subarray |
| 320 | Outside ML Layer |
| 330 | Array of TOLED |
| 340 | Inside ML Layer |
| 400 | Flat Array Diagram |
| 500 | Spherical Array Diagram |
| 612 | Spherical Radius |
| 652 | Left Eye |
| 654 | Right Eye |
| 656 | Inter Pupillary Distance |
| 600 | Pilot Visor |
| 700 | Pilot Display |
| 706 | Periphery TOLED Component |
| 800 | Method Flow |
| 802 | Transmit Ambient Component |
| 804 | Presenting Ambient Component |
| 806 | Commanding Display Signal |
| 808 | Receiving Display Signal |
| 810 | Generating Symbology |
| 812 | Illuminating TOLED element |
| 814 | Displaying Symbology |
| 816 | Presenting Symbology |

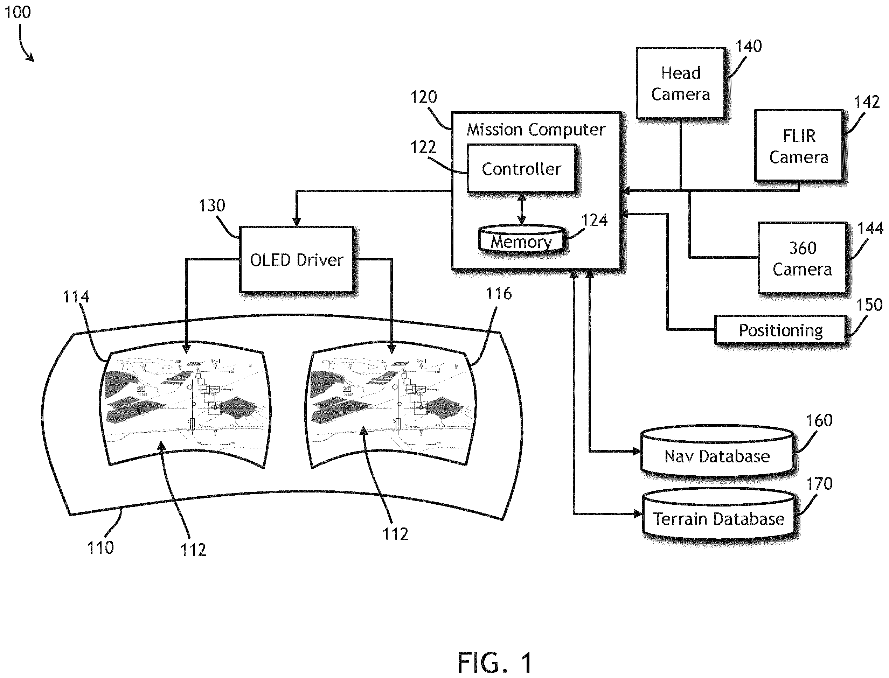

### FIG 1 SYSTEM

Referring now to FIG. 1, a diagram of a system for head mounted visual display in accordance with an embodiment of the inventive concepts disclosed herein is shown. Generally, the system for head mounted visual display 100 may simplify a Head Mounted Display (HMD) design while providing high resolution, wide field of view, and high performance in a desirable Size Weight Power and Cost SWaP-C configuration. The system may employ an array of individual Transparent Organic Light Emitting Diode (TOLED) (or similar emitter) elements or a group of sub-elements between dual microlens (ML) elements to create a transparent visual display. The user is able to simultaneously focus on ambient imagery and synthetic overlay symbology directly on the transparent visual display. The ML array on the user side of the transparent visual display may present the TOLED image at a further distance (e.g., several feet to infinity) (to prevent near focus eye strain) and the ML array on the subject side of the transparent visual display enables presentation of the ambient scene behind the transparent OLED to the user eye. The pixel pitch of the ML-OLED-ML array determines the visual acuity of the overlay. Smaller pixels will result in higher visual acuity because more pixels are included per unit area.

The system for HMD 100 may include a visor 110 upon which the system may couple a transparent visual display 112, the transparent visual display may be wearable by a user.

For stereoscopic presentation to a user, the system for HMD 100 may optionally employ a left visor display 114 and a right visor display 116. Contemplated herein, the system for HMD 100 may be presented before a single user eye leaving the other eye unobstructed to view the ambient content. Content for the system for HMD may be generated from a mission computer 120 including a controller 122 coupled with a memory 124. The memory 124 may include a tangible, non-transitory memory configured to communicate with the controller, the tangible, non-transitory memory having instructions stored therein that, in response to execution by the controller, cause the controller to execute a variety of commands to enable function of the system for HMD 100. In some embodiments, an OLED driver 130 between the controller 122 and the transparent visual display 112 may function to drive a specific display type.

For content generation, a plurality of sensors may feed content to the controller 122 including a positioning system 150, a navigation database 160, and a terrain database 170. Also, to supply the controller 122 with visual content, the system for HMD may employ a head camera 140, a Forward Looking Infrared (FLIR) camera 142, and a 360 camera 144 of various wavelength sensory capability.

In one embodiment of the inventive concepts disclosed herein, the head camera 140 and 360 camera 144 may include a night vision type sensor able to receive and process wavelengths similar to those displayable by similar traditional night vision systems.

In one embodiment of the inventive concepts disclosed herein, the visor 110 may be generally used herein as an eye protection worn by a flight crew. It is contemplated herein, the visor 110 may include any transparent surface through which a user may be able to view surrounding ambient objects. In one embodiment, the visor may be a transparent shield attached to a helmet worn by a pilot. In another embodiment, the visor may be incorporated within glasses or googles worn by the user. In yet another embodiment, the visor may include lenses worn proximal to an eye surface of the user.

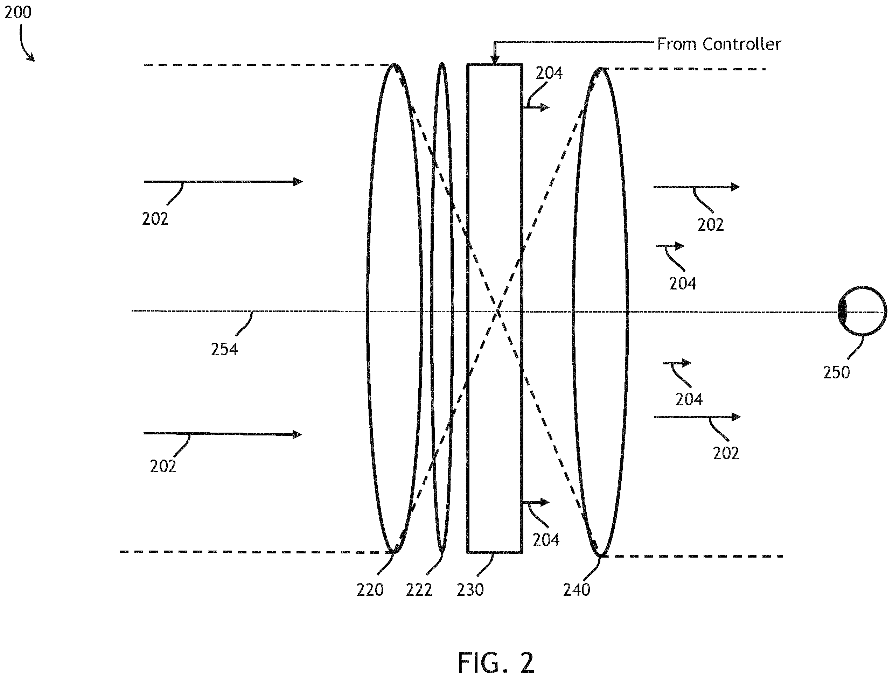

### FIG 2 PIXEL

Referring now to FIG. 2, a diagram of an individual TOLED element of a transparent visual display in accordance with an embodiment of the inventive concepts disclosed herein is shown. An individual pixel 200 of the transparent visual display may make up an individual element which, when assembled with like elements, may comprise transparent visual display 112.

The individual pixel 200 may include an individual TOLED element 230, each individual TOLED element 230 associated with and coupled with an inside ML element 240 proximal with the user and an outside ML element 220 more distal from the user. Each of the TOLED element 230 and the two MK elements 220 240 aligned along an optical axis 254.

In function, the TOLED element 230 may produce a TOLED component 204 of illumination visible to the eye of the user 250. The TOLED component 204 may include an intensity as well as a color based on the signal from the controller 122.

The inside ML 240 may function to present the TOLED component 204 of the associated individual TOLED element 230 to infinity at an eye of the user. The inside ML 240 may function to present the TOLED component 204 at a distance viewable to an eye of the user. Such distance may be, for example, several feet forward of the visor to infinity to enable the user to view the TOLED component 204 at as if it were distant from the user eye 250 so that the user may properly and easily focus on the presented TOLED component 204.

The outside ML 220 may function to present an ambient component 202 to infinity at the eye of the user. In this manner, the individual pixel 200 may make available to the eye of the user 250 the presented ambient component 202 as well as the presented TOLED component 204. The outside ML 220 may work in conjunction with the inside ML 240 to create an image viewable to the eye of the user 250 at the distance viewable. Working with the inside ML 240, the outside ML 220 may overlay the ambient component 202 at the distance viewable to the eye of the user 250. In one embodiment, the outside ML 220 and the inside ML 240 may create a 1:1 image viewable to the eye of the user 250. This allows the user to normally view the ambient component 202. This combination of ML elements 220 240 may collimate the image enabling the user to focus and view the TOLED component 204 superimposed on the ambient component 204.

In one embodiment of the inventive concepts disclosed herein, the TOLED may include a plurality of types of illuminating elements including a Liquid Crystal Display (LCD), a micro LED, and a quantum dot. Depending on a preference of the user, additional types of transparent display elements may be functional with the system for HMD 100.

In one embodiment of the inventive concepts disclosed herein, the pixel density of each of the spherical shaped OLED arrays may be approximately 75 pixels per inch (PPI) wherein another exemplary embodiment the resolution may be much greater employing a pixel density of 950 PPI. Contemplated herein, no limits on a desirable pixel density may be applied to the array of OLEDs disclosed herein. A desirable resolution of the displayed symbology to effect mission success yet maintain a desirable helmet weight and weight distribution may be factors included in a pixel density decision. In embodiments, a high-resolution display of 1920 by 1080 pixels may function within the scope of the inventive concepts disclosed herein. Contemplated herein, the pixel density may meet or exceeds 20/20 visual acuity as presented to the user. The individual pixel 200 may be a small as several microns in size enabling the transparent visual display 112 to exceed the 1920 x 1080 resolution. To achieve 20/20 visual acuity, the transparent visual display 112 may approximate 4000 pixels across a 65-degree field of view (FOV). To achieve a higher resolution visual acuity of 20/10, the transparent visual display 112 may employ a pixel density of approximately 8000 individual pixels 200 across the 65-degree FOV.

One embodiment of the inventive concepts disclosed herein, the smaller the pixel size, the more pliable the transparent visual display 112. Should a user prefer to bend or form the transparent visual display 112 to a specific shape, a smaller pixel size may operate to allow the ability to conform to a physical shape.

In one embodiment of the inventive concepts disclosed herein, the individual pixel 200 may further include a field lens 222 sited in a plurality of locations for optimal focus and image quality of the ambient component 202. Here, the field lens may be indicated on the outside of the TOLED element 230 while in an additional embodiment the field lens 222 may be sited on the inside of the TOLED 230 closer to the eye of the user 250.

In one embodiment of the inventive concepts disclosed herein, the individual pixel 200 may further include a telecentric lens used functional as one of or both of the outside ML 220 as well as the inside ML 240.

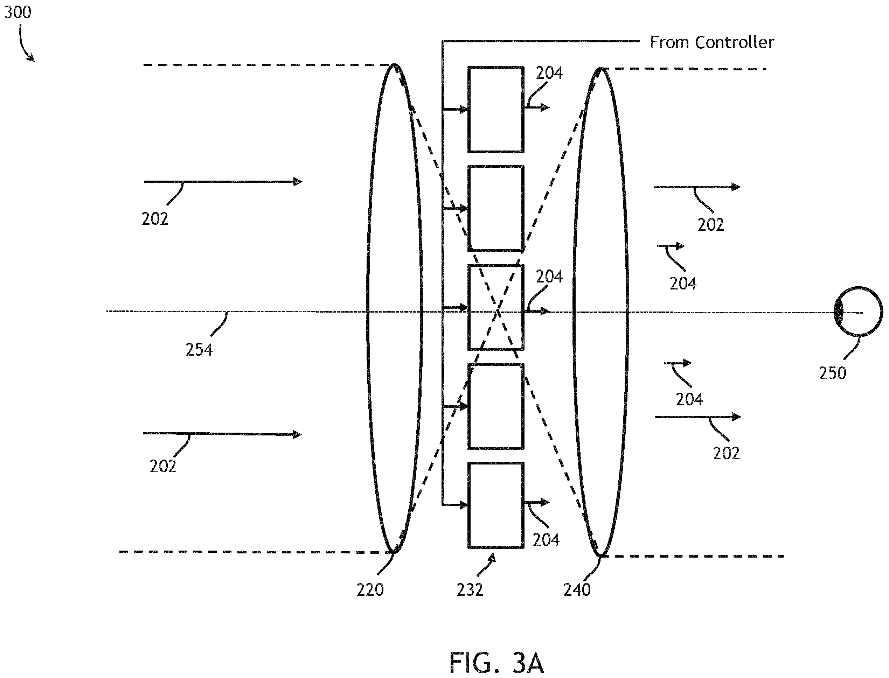

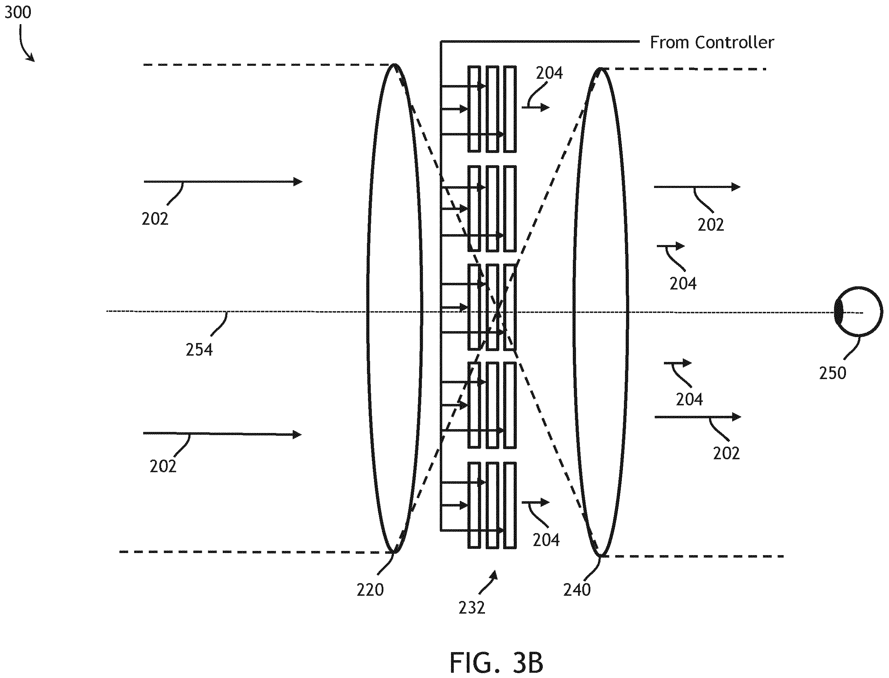

### FIG 3A & 3B SUB-ARRAY

Referring now to FIGs. 3A and 3B, diagrams of individual TOLED element of a transparent visual display with subarrays exemplary of an embodiment of the inventive concepts disclosed herein is shown. An individual pixel with subarrays 300 may also maintain function within the scope of the inventive concepts disclosed herein. A subarray of TOLED 232 may function to increase a resolution of the TOLED component 204 increasing the resolution of the overall transparent visual display 112 adding more individual TOLED elements to a single pixel. Each individual TOLED element 230 within the subarray of TOLED 232 may receive its individual signal from the controller 122.

FIG. 3A may indicate a subarray of TOLED 232 aligned perpendicular to the optical axis 252 while FIG. 3B may indicate a subarray of TOLED 232 aligned along the optical axis 254 enabling the layered subarray of TOLED 232 to generate overlays at different depths for the user.

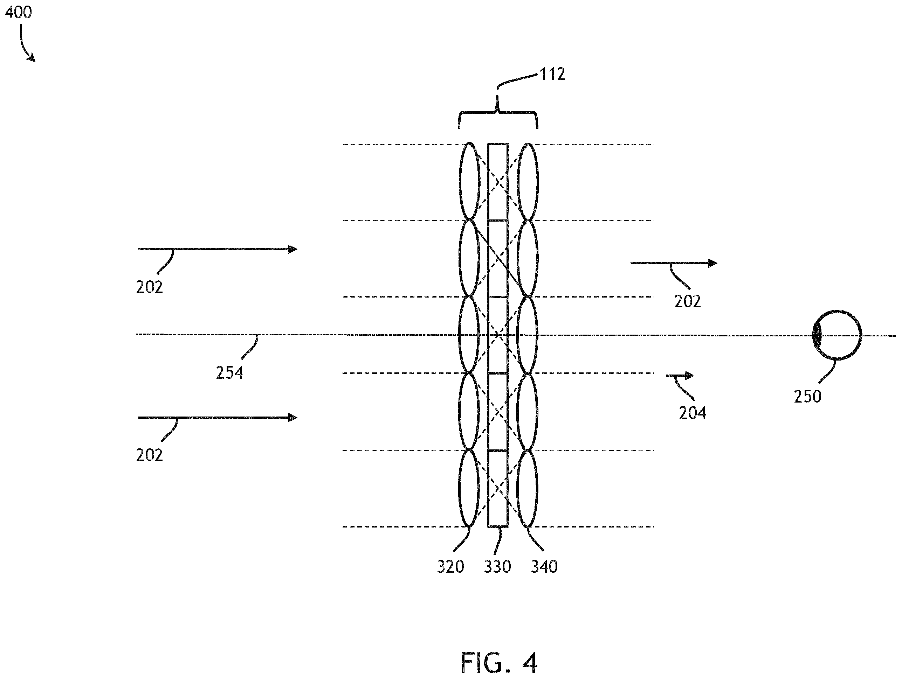

### FIG 4 FLAT ARRAY

Referring now to FIG. 4, a diagram of a flat transparent visual display exemplary of one embodiment of the inventive concepts disclosed herein is shown. A flat array diagram 400 may offer one exemplary embodiment of the inventive concepts disclosed herein. The transparent visual display 112 may be comprised of layers of joined individual elements. Coupled with like individual elements, an array of TOLED 330 may be comprised of a plurality of individual TOLED elements 230. the inside ML element 240 may comprise an inside ML layer 340 proximal with the eye of the user 250. Similarly, an outside ML layer 320 may be comprised of a plurality of outside ML elements 220.

The flat array 400 may find function in a specific implementation where a wide field of view is not required. Contemplated herein, the flat array 400 may be manufactured at an appealing cost which may be considerably less than a more detailed array discussed below. In one example, a rifle scope or monocular device may function with the flat array 400 included therein. Using the flat array 400, should the user eye deviate from the optical axis 254, the user may experience a level of vignetting and distortion within the pixels along the optical axis 254. Similarly, should a manufacturer create a transparent visual display 112 of too large a size for the function, the user may experience the same vignetting of the pixels more distant from the optical axis 254.

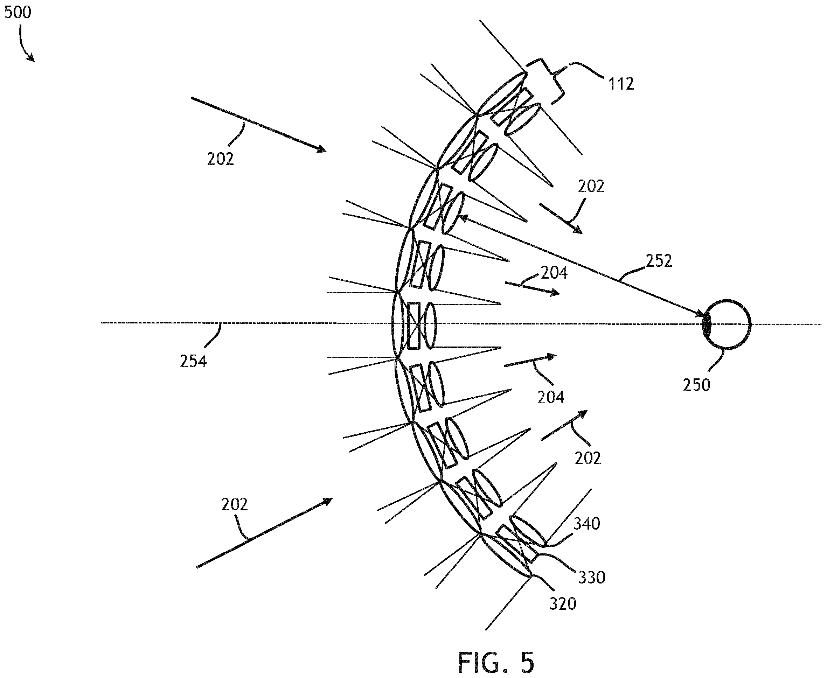

### FIG 5 CURVED ARRAY

Referring now to FIG. 5, a diagram of a two-dimensional slice of a spherical transparent visual display exemplary of one embodiment of the inventive concepts disclosed herein is shown. A spherical array diagram 500 may indicate one embodiment of a shaped installation of the transparent visual display 112. The transparent visual display 112 may be oriented in a spherical topography to ensure that an optical path through the ML-TOLED-ML is always along the user eye line of sight, thereby optimizing optical throughput and image clarity, while limiting any distortion or vignetting from off-axis viewing angles. In embodiments, a center of the spherical array may align with the optical axis 254.

In embodiments, the spherical array may be sized to a hemispheric arc of 180 degrees or greater to enable peripheral view to the user. An eye radial 252 may be defined as a length from the eye of the user 250 to the transparent visual display 112. In embodiments, the eye radial 252 may be equal to the radius of the sphere to which the transparent visual display 112 is formed.

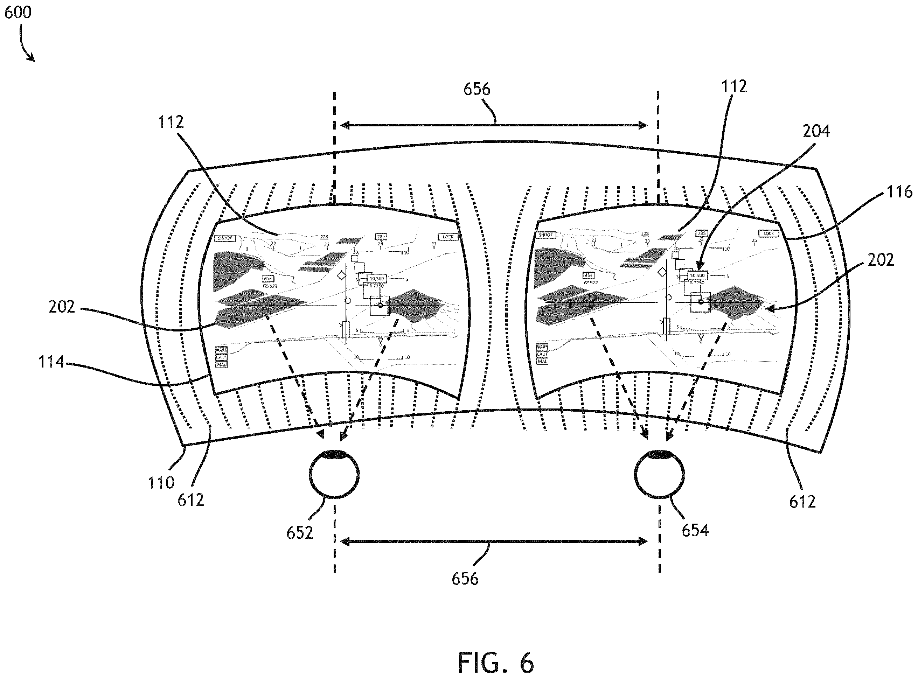

### FIG 6 PILOT VISOR

Referring now to FIG. 6, a diagram of a stereoscopic user display of a transparent visual display in accordance with one embodiment of the inventive concepts disclosed herein is shown. A pilot visor diagram 600 may indicate one embodiment of the spherical topography of the transparent visual display 112. The transparent visual display 112 may be couplable with the visor 110 enabling a user to view the presented scene.

A stereoscopic presentation of the transparent visual display 112 may be presented to each of a left eye 652 and a right eye 654 of the user. The eye radius 254 may be equal to a spherical radius 612 to which the transparent visual display 112 is shaped. Each of the left 114 and right 116 visor display may be separated by an Inter Pupillary Distance 656 which may be adjustable by the user. Similar to adjusting a pair of binoculars, the visor display may be mechanically adjustable in one or more axes for a variety of users.

In function, the controller 122 may command a display signal, the display signal including at least one of: a mission parameter, an information parameter, a navigation parameter, and a system parameter, receive the display signal, generate a symbology based in part on the display signal, and illuminate at least one individual TOLED element to display the symbology on the transparent visual display. The symbology may include traditional elements such as a velocity vector or flight path marker, navigation and communication details, a target designator box, threat indications, and weapons delivery parameters.

In one embodiment of the inventive concepts disclosed herein, the transparent visual display 112 may include additional symbology. Possibly limited by a pilot ability to visually process the TOLED component 204, the system for HMD 100 may display a variety of information presented automatically by the system for HMD 100 as well as a pilot selectable declutter option to provide a user defined portion of the symbology and limit a quantity of the content presented within the TOLED component 204.

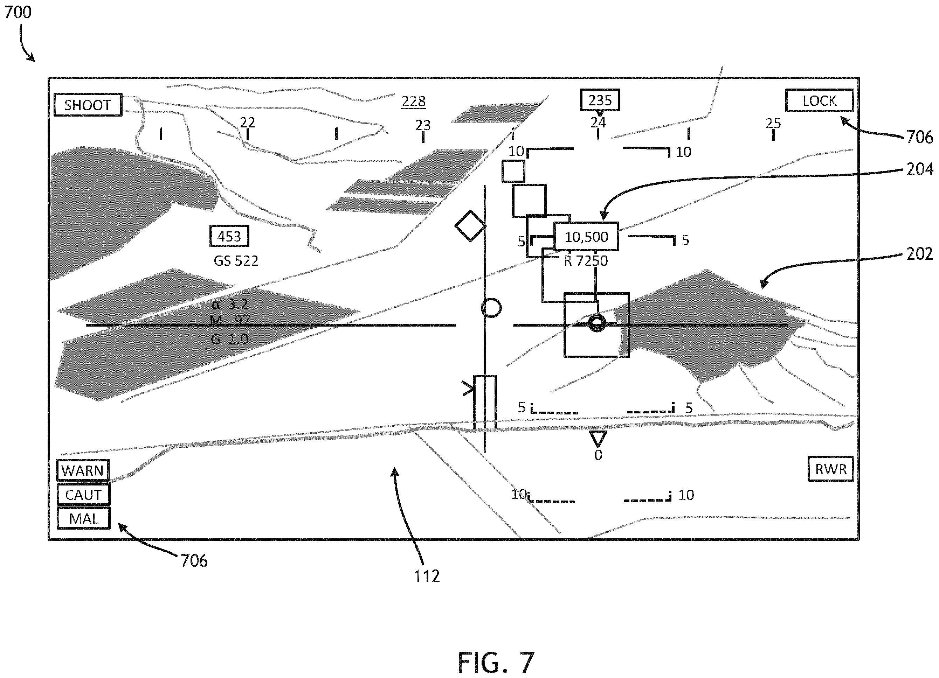

### FIG 7 PILOT DISPLAY

Referring now to FIG. 7, a diagram of an exemplary pilot display associated with one embodiment of the inventive concepts disclosed herein is shown. A pilot display 700 may include controller 122 generated symbology as well as ambient scenes received by one or more of the sensors (e.g., head camera, 360 camera). Normally, the ambient component 202 may be passively transmitted through the transparent visual display 112 while the TOLED content 204 may be actively generated by the controller 122. Should the ambient component 202 be obscured however, the system for HMD 100 may function to reference one or more of the terrain database 170 and positioning system 150 to display a synthetic version of the ambient component 202.

Some of the symbology presented as a portion of the TOLED component 204 may include a mission parameter including a weapons employment indicator, a weapons status, a defensive parameter, and a threat status. Also, an information parameter may include a communication parameter and a data link parameter while a navigation parameter may include a heading indicator, a route parameter, and a sensor data including display of the ambient component 202. Also, a system parameter may include an aircraft system status, a system warning, and a system quantity. In addition, the pilot display 700 may include a periphery TOLED component 706 which may display a variety of information within the pilot display 700.

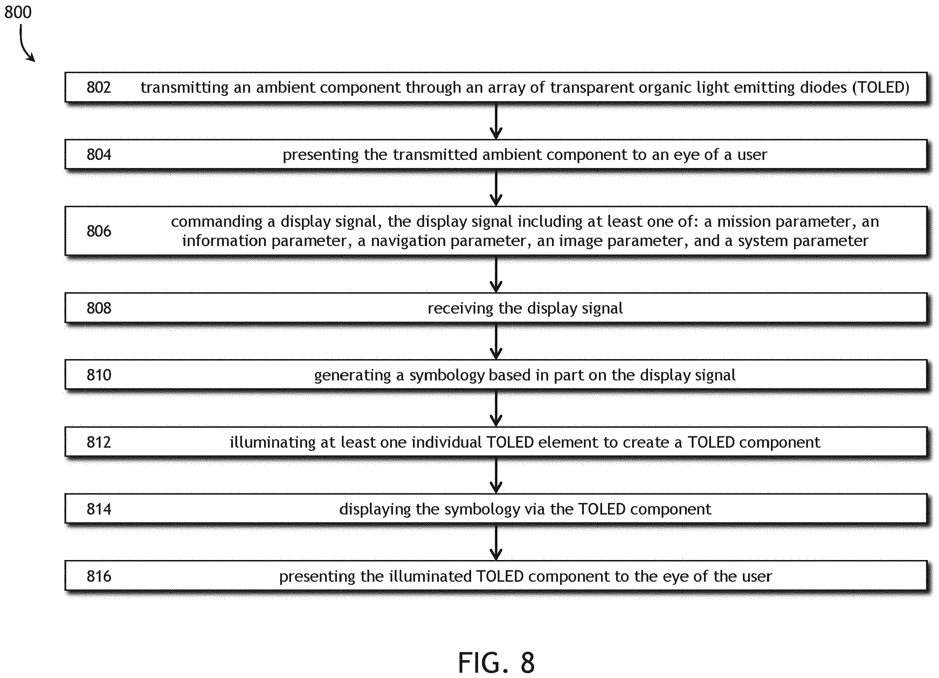

### FIG 8 METHOD

Referring now to FIG. 8, a method flow diagram exemplary of one embodiment of the inventive concepts disclosed herein is shown. A method 800 may include, at a step 802, transmitting an ambient component through an array of transparent organic light emitting diodes (TOLED) and, at a step 804, presenting the transmitted ambient component to an eye of a user. To display the TOLED component 204, the method 800 may include, at a step 806, commanding a display signal, the display signal including at least one of: a mission parameter, an information parameter, a navigation parameter, and a system parameter and, at a step 808, receiving the display signal. At a step 810, the method 800 may include generating a symbology based in part on the display signal and, at a step 812, illuminating at least one individual TOLED element to create a TOLED component 204. The method 800 may include, at a step 814, displaying the symbology via the TOLED component; and, at a step 816, presenting the illuminated TOLED component to the eye of the user 250.

### CONCLUSION

As will be appreciated from the above description, embodiments of the inventive concepts disclosed herein may provide a novel solution to display an image upon a head mounted visor using transparent organic light emitting diodes.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system (100) for head mounted visual display, comprising:
a transparent visual display (112), the transparent visual display couplable to a visor (110) and wearable by a user, the transparent visual display (112) including:
an array (330) of transparent organic light emitting diodes (TOLED); the array of TOLED comprised of a plurality of individual TOLED elements (230), each individual TOLED element associated with and coupled with an inside Microlens (ML) element (240) and an outside ML element (220);
an inside ML layer (340) proximal with the user and comprised of a plurality of the inside ML elements (240), each inside ML element configured to present a TOLED component of the associated individual TOLED element at a distance viewable to an eye of the user;
an outside ML layer (320) distal from the user and comprised of a plurality of the outside ML elements (220), each outside ML element configured to present an ambient component through the inside ML element at the distance viewable to the eye of the user;
a controller (122) operatively coupled with the array of TOLED;
a tangible, non-transitory memory (124) configured to communicate with the controller, the tangible, non-transitory memory having instructions stored therein that, in response to execution by the controller, cause the controller to:
command a display signal, the display signal including at least one of: a mission parameter, an information parameter, a navigation parameter, an image parameter, and a system parameter;
receive the display signal;
generate a symbology based in part on the display signal;
illuminate at least one individual TOLED element to display the symbology on the transparent visual display.

2. The system for head mounted visual display of claim 1, wherein transparent visual display is spherically shaped (500) having a sphere radius (612) equal to an eye radius of the user.

3. The system for head mounted visual display of claim 2, wherein the spherically shaped transparent visual display (500) is coupled to the visor (110) in a stereoscopic dual configuration, and a center of each spherically shaped array aligns with an optical axis of each eye of the user.

4. The system for head mounted visual display of claim 3, wherein the stereoscopic dual configuration includes a mechanical adjustment between the spherical shaped arrays to conform to a user inter-pupillary distance.

5. The system for head mounted visual display of any of claims 2 to 4, wherein the spherically shaped transparent visual display comprises a 180 degree hemispheric visual display.

6. The system for head mounted visual display as claimed in any preceding claim, wherein the transparent visual display further comprises a field lens (222) and the field lens is one of: between the outside ML element (220) and the associated individual TOLED element (230), between the inside ML element (240) and the associated individual TOLED element (230), and a dual field lens configuration on both sides of the associated individual TOLED element (230).

7. The system for head mounted visual display as claimed in any preceding claim, wherein the array (330) of TOLED further includes at least one subarray (232) grouped within a single pair of ML elements.

8. The system for head mounted visual display as claimed in any preceding claim, wherein the array of TOLED further includes at least two layers of TOLED arrays along an optical axis configured to display a plurality of parameters.

9. The system for head mounted visual display as claimed in any preceding claim, wherein the mission parameter further comprises one of a weapons employment indicator, a weapons status, a defensive parameter, and a threat status, and the information parameter further comprises one of a communication parameter, and a data link parameter.

10. The system for head mounted visual display as claimed in any preceding claim, wherein the navigation parameter further comprises one of a heading indicator, and a route parameter, and the image parameter further includes a sensor data including a sensed display of the ambient component.

11. The system for head mounted visual display as claimed in any preceding claim, wherein the system parameter further comprises an aircraft system status, a system warning, and a system quantity.

12. A method (800) for displaying symbology to a user, comprising:
transmitting an ambient component through an array of transparent organic light emitting diodes (TOLED) (802);
presenting the transmitted ambient component at a distance viewable by an eye of a user (804);
commanding a display signal (806), the display signal including at least one of: a mission parameter, an information parameter, a navigation parameter, an image parameter, and a system parameter;
receiving the display signal (808);
generating a symbology based in part on the display signal (810);
illuminating at least one individual TOLED element to create a TOLED component (812);
displaying the symbology via the TOLED component (814); and
presenting the illuminated TOLED component to the distance viewable by the eye of the user (816).

13. The method for displaying symbology to a user of claim 12, wherein transmitting an ambient component further comprises a passive transmission of the ambient component.

14. The method for displaying symbology to a user of claim 12 or 13, wherein illuminating at least one individual TOLED element further comprises illuminating an intensity and a color of the at least one individual TOLED element.

15. The method for displaying symbology to a user as claimed in any of claims 12 to 14, wherein displaying the symbology via the TOLED component further comprises displaying a stereoscopic and hemispheric shape of the TOLED component and wherein generating a symbology further comprises generating a user defined portion of the symbology.
